# EUROPÄISCHE PATENTSCHRIFT

(11) **EP 1 516 766 B1**
(45) Veröffentlichungstag und Bekanntmachung des Hinweises auf die Patenterteilung: **05.03.2008**
(21) Anmeldenummer: 04021874.5
(22) Anmeldetag: 15.09.2004
(51) Int. Cl.: B60W 30/14, B60W 10/06, B60W 10/18

(54) **Verfahren und Vorrichtung zur Steuerung der Geschwindigkeit eines Fahrzeugs**
Method and apparatus of a cruise control for a vehicle
Méthode et dispositif de commande de vitesse pour véhicule

(30) Priorität: 19.09.2003 DE 10343461
(43) Veröffentlichungstag der Anmeldung: 23.03.2005
(73) Patentinhaber: ROBERT BOSCH GMBH, 70442 Stuttgart (DE)
(72) Erfinder: Hellmann, Manfred, 71706 Hardthof (DE); Mougey, Yannik, 76744 Woerth am Rhein (DE)

(56) Entgegenhaltungen:
- EP-A- 1 106 417
- DE-A1- 19 833 838

## Beschreibung

Die vorliegende Erfindung betrifft ein Verfahren und eine Vorrichtung zur Steuerung der Geschwindigkeit eines Fahrzeugs, wobei die Fahrzeuggeschwindigkeit im Rahmen einer Regelung eines Istwertes auf einen vorgegebenen Sollwert gesteuert wird und bei Unterbrechung des Kraftflusses zwischen der Antriebseinheit des Fahrzeugs und den Antriebsrädern die Regelung zumindest teilweise wirkungslos geschaltet wird. Bei Erkennen einer Fahrpedalbetätigung durch den Fahrer unmittelbar vor oder während der Kraftflussunterbrechung für eine vorbestimmte Zeitdauer wird eine Verzögerungsbegrenzung aktiviert, um unerwünschte Bremseingriffe während eines Überholvorganges zu vermeiden.

### Stand der Technik

Aus der DE 198 33 838 A1, das die Merkmale des Oberbegriffs der Ansprüche 1 und 8 zeigt, ist ein Verfahren und eine Vorrichtung zur Steuerung der Geschwindigkeit eines Fahrzeugs bekannt, wobei diese Steuerung im Rahmen einer Regelung eines Istwertes auf einen Sollwert vorgenommen wird. Bei Unterbrechen des Kraftflusses zwischen der Antriebseinheit und den Antriebsrädern wird der Regler wirkungslos geschaltet. Bei Wiederherstellen des Kraftflusses wird die Regelung automatisch wieder wirksam geschaltet.

### Kern und Vorteile der Erfindung

Der Kern der vorliegenden Erfindung ist es, ein Verfahren und eine Vorrichtung anzugeben, insbesondere für ein Fahrzeug, das mit einer adaptiven Abstands- und Geschwindigkeitsregelung ausgestattet ist und über ein Handschaltgetriebe verfügt, wobei während einer Kraftflussunterbrechung und gleichzeitiger oder bereits vorher einsetzender Fahrpedalbetätigung unerwünschte Bremseingriffe vermieden werden sollen. Erfindungsgemäß wird dieses durch die Merkmale der unabhängigen Ansprüche gelöst. Adaptive Abstands- und Geschwindigkeitsregler sind in der Lage, den Abstand und die Relativgeschwindigkeit eines vorausfahrenden Fahrzeugs zu erfassen und in deren Abhängigkeit die Geschwindigkeit des eigenen Fahrzeugs derart zu steuern, dass eine Regelung im Sinne einer Konstantabstandsregelung vorgenommen wird. Viele derartige Systeme sind so ausgelegt, dass, wenn der Fahrer während der aktiven Abstandsregelung das Fahrpedal betätigt, die Regelung für die Dauer der Fahrpedalbetätigung unterbrochen wird und das Fahrzeug während der Fahrpedalbetätigung auf höhere Geschwindigkeiten als die vorausberechnete Sollgeschwindigkeit beschleunigt werden kann und dabei auch der Mindestabstand unterschritten werden kann. Nimmt der Fahrer in dieser Situation einen Schaltvorgang mittels eines handgeschalteten Getriebes vor, so geht der Fahrer hierzu kurzzeitig vom Fahrpedal, so dass Situationen entstehen können, in denen die Regelung wieder einsetzt und bevor der Fahrer mit der neuen Gangstufe weiterfahren kann, eine automatische Verzögerung durch den Abstands- und Geschwindigkeitsregler einsetzt. Dieses Regelverhalten ist für den Fahrer intuitiv nicht nachvollziehbar, so dass hieraus gefährliche Reaktionen seitens des Fahrers entstehen können, die durch die erfindungsgemäße Vorrichtung und das erfindungsgemäße Verfahren vermieden werden sollen.

Vorteilhafte Weiterbildungen und Ausgestaltungen ergeben sich aus den Unteransprüchen.

Vorteilhafter Weise sind der Istwert und der Sollwert Beschleunigungswerte, Momentenwerte oder Geschwindigkeitswerte. Das Vorsehen von Beschleunigungswerten, Momentenwerten oder Geschwindigkeitswerten als Ist- und Sollwerte, ist bei der Verwendung moderner Motorsteuergeräte vorteilhaft, da diese die Ausgangsdaten der Abstandsregelung besonders einfach verarbeiten können.

Weiterhin ist es vorteilhaft, dass der vorgegebene Sollwert in Abhängigkeit der Relativgeschwindigkeit und/oder des Abstandes mindestens eines vorherfahrenden Fahrzeugs mittels eines Sensors zur adaptiven Abstandsregelung ermittelbar ist.

Weiterhin ist es vorteilhaft, dass der Abstandssensor ein Radarsensor, ein Lasersensor, ein Ultraschallsensor, ein Videosensor oder eine Kombination aus diesen Sensorarten ist. Dabei können auch mehrere Sensoren der gleichen Art oder unterschiedlicher Sensorarten gemeinsam in einem Fahrzeug verbaut sein und sich gegebenenfalls gegenseitig ergänzen.

Vorteilhafter Weise ist die Verzögerungsbegrenzung für die Dauer des Gangwechsels aktiv. Diese Ausführung ist vorteilhaft, da die ungewünschte Verzögerung des Fahrzeugs gerade während der Zeitdauer des Gangwechsels auftreten kann, da zu dieser Zeitdauer der Fahrer das Gaspedal zurücknimmt und die Regelung die Fortführung des Beschleunigungsvorgangs nicht erkennen kann.

Weiterhin ist es vorteilhaft, dass die Zeitdauer der Verzögerungsbegrenzung zwischen 1 und 2 Sekunden beträgt. Diese Ausführung ist vorteilhaft, da ein Gangwechsel mittels handgeschaltetem Getriebe innerhalb einer Zeitdauer von 1 bis 2 Sekunden durchgeführt wird und der Fahrer nach Einlegen des Ganges und Schließen der Kupplung noch eine geringe Restzeit hat, bis das Gaspedal wieder übertreten sein muss, so dass die Regelung ein Übertreten erkennt und die Abstands- und Geschwindigkeitsregelung weiterhin unterbrochen bleibt.

Vorteilhafter Weise ist die Verzögerungsbegrenzung so dimensioniert, dass auf ebener Fahrbahn keine Fahrzeugsverzögerung durch die Verzögerungseinrichtungen des Fahrzeugs erfolgt. Hierbei kann die Verzögerungsbegrenzung so dimensioniert sein, dass ein Bremseneingriff grundsätzlich unterbunden wird, oder aber so dimensioniert sein, dass auf ebener Fahrbahn eine Verzögerung durch die Verzögerungseinrichtung nicht stattfindet, aber bei abschüssiger Fahrstrecke eine Verzögerung stattfindet, die das Beschleunigungsmoment in Folge der Hangabtriebkraft gerade ausgeglichen wird.

Vorteilhafter Weise sind fahrerbetätigbare Mittel vorgesehen, mittels denen die Zeitdauer der Verzögerungsbegrenzung durch den Fahrer einstellbar sind. Hierdurch erhält der Fahrer die Möglichkeit, das erfindungsgemäße System nach seinen Vorlieben einzustellen, so dass das System der Fahrcharakteristik des Fahrers entspricht.

Weiterhin ist vorteilhaft, dass akustische und/oder optische Mittel vorgesehen sind, die dem Fahrer signalisieren, ob die Verzögerungsbegrenzung aktiv ist. Hierdurch wird der Fahrer jederzeit informiert, ob eine Verzögerung momentan begrenzt wird oder eine unbegrenzte Verzögerung durchgeführt werden kann. Dies verhindert, dass der Fahrer in eine Situation gerät, die nicht intuitiv nachvollziehbar ist und somit eine Gefahrensituation geschaffen werden könnte.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung und
- Figur 2: ein schematisches Ablaufdiagramm einer Ausführungsform des erfindungsgemäßen Verfahrens.

### Beschreibung von Ausführungsbeispielen

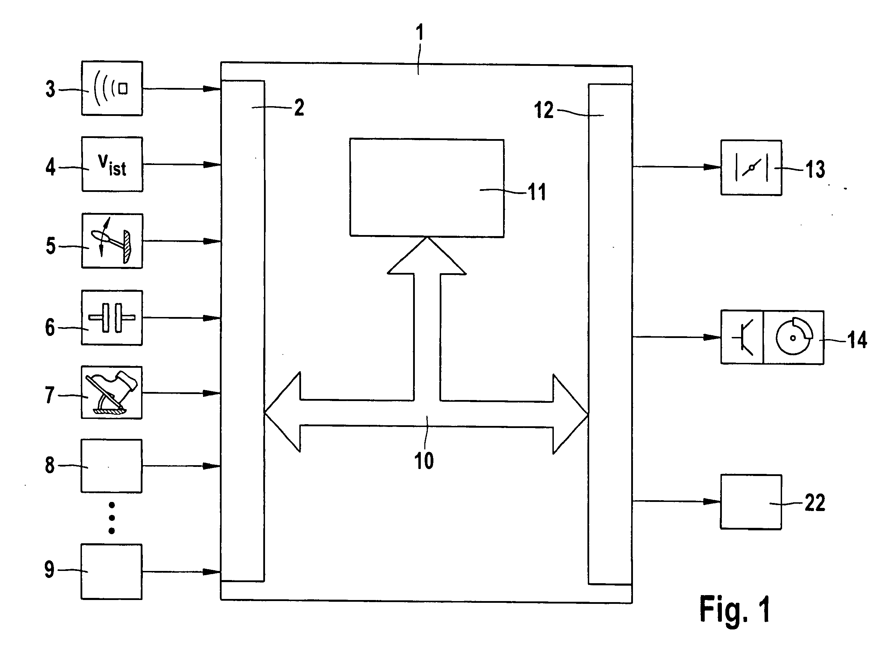

In Figur 1 ist ein Blockschaltbild der erfindungsgemäßen Vorrichtung dargestellt. Zu erkennen ist eine adaptive Abstands- und Geschwindigkeitsregeleinrichtung (1), die u.a. eine Eingangsschaltung 2 aufweist. Mittels der Eingangsschaltung 2 sind der adaptiven Abstands- und Geschwindigkeitsregeleinrichtung 1 Eingangsgrößen zuführbar. Als Eingangsgrößen werden der Eingangsschaltung 2 Signale eines Objektsensors 3 zugeführt. Der Objektsensor 3 kann beispielsweise als Radarsensor, als Lasersensor, als Ultraschallsensor, als Videosensor oder als eine Kombination hieraus ausgeführt sein. Der Objektsensor 3 erkennt Objekte im Erfassungsbereich des Sensors und ermittelt den Abstand, die Relativgeschwindigkeit und eventuell den Adsimutwinkel des vorhandenen Objektes und leitet diese Werte an die Eingangsschaltung 2 des Abstands- und Geschwindigkeitsreglers 1 weiter. Ebenfalls ist es möglich, die Zeitlücke mittels des Objektsensors 3 zu ermitteln, die dem Abstand entspricht, in dem das eigene Fahrzeug dem vorausfahrenden Objekt folgt. Weiterhin wird der Eingangsschaltung 2 ein Geschwindigkeitssignal eines Geschwindigkeitssensors 4 zugeführt. Der Geschwindigkeitssensor 4 erfasst die tatsächliche Istgeschwindigkeit des eigenen Fahrzeugs, die beispielsweise mittels Raddrehzahlsensoren, die im Rahmen einer Blockierschutzeinrichtung oder einer elektronischen Fahrdynamikregelung am Fahrzeug angebracht sind. Weiterhin werden der Eingangsschaltung 2 Signale einer fahrerbetätigbaren Bedieneinrichtung 5 zugeführt. Die fahrerbetätigbare Bedieneinrichtung 5 ist beispielsweise in Form von Tasten am Lenkrad oder in der Nähe des Lenkrads ausgeführt, womit der Fahrer den adaptiven Abstands- und Geschwindigkeitsregler in Betrieb nehmen kann, ausschalten kann sowie Regelparameter und Systemeinstellungen verändern kann. Der Eingangsschaltung 2 wird weiterhin ein Signal eines Kupplungssensors 6 zugeführt, der erkennt, ob die Kupplung kraftschlüssig verbunden ist, geöffnet ist oder nur teilweise geschlossen ist. Hierdurch wird der Regeleinrichtung 1 mitgeteilt, ob die Antriebseinrichtung des Fahrzeugs mit den Antriebsrädern kraftschlüssig verbunden ist oder eine Unterbrechung des Kraftflusses vorliegt. Weiterhin wird der Eingangsschaltung 2 ein Signal α GP des Fahrpedals 7 zugeführt, das vorteilhafter Weise die Winkelstellung des Fahrpedals wiedergibt. Hierdurch wird der Regeleinrichtung signalisiert, ob der Fahrer bei aktivierter Abstandsund Geschwindigkeitsregelung eine manuelle Beschleunigung wünscht und hierdurch das Gaspedal niedergedrückt wird. Dies führt im normalen Regelbetrieb zum Übertreten, d.h. die berechnete Sollgeschwindigkeit wird überschritten, so lange der Fahrer das Gaspedal manuell niederdrückt. Weiterhin ist es möglich, der Eingangsschaltung 2 der Regeleinrichtung 1 weitere Signale von Vorrichtungen 8 bis 9 zuzuführen, die ebenfalls für die automatische, adaptive Abstands- und Geschwindigkeitsregelung verwendbar sind. Als weitere Eingangsgrößen können die Einrichtungen 8 bis 9 beispielsweise Kupplungspedalsensoren oder ein Drehzahlsensor der Antriebseinheit oder Getriebesensoren sein, die erfassen, in welcher Getriebestufe das Getriebe momentan eingestellt ist oder welche Getriebestufe während eines Schaltvorgangs eingelegt wird. Die von den Einrichtungen 3 bis 9 erzeugten Ausgangssignale, die der Eingangsschaltung 2 zugeführt werden, werden im Abstands- und Geschwindigkeitsregler 1 mittels einer Datenaustauscheinrichtung 10 an eine Berechnungseinrichtung 11 weitergegeben. In der Berechnungseinrichtung 11 läuft eine Berechnung ab, die aus den Eingangsgrößen Sollwerte und Stellsignale ermittelt, mittels denen das Fahrzeug selbständig beschleunigt, verzögert und automatisch längsgeführt werden kann. In der Berechnungseinrichtung 11 läuft ebenfalls das erfindungsgemäße Verfahren ab, nach dem bei betätigter Kupplung und Fahrpedalbetätigung kurz vor oder während der Kupplungsbetätigung das Stellsignal für die Verzögerungseinrichtungen des Fahrzeugs für eine vorbestimmte Zeitdauer tau auf einen vorbestimmten Wert begrenzt werden kann. Die Berechnungseinrichtung 11 gibt unter anderem ein Beschleunigungsanforderungssignal für die Antriebseinrichtung des Fahrzeugs aus, ein Verzögerungsstellsignal für die Verzögerungseinrichtung des Fahrzeugs, sowie Fahrerinformationssignale, die beispielsweise akustische Warntöne oder optische Anzeigen in Form von Kontrollleuchten oder Displayanzeigen in der Armaturentafel des Fahrzeug sein können. Die von der Berechnungseinheit 11 ermittelten Stellsignale werden mittels der Datenaustauscheinrichtung 10 einer Ausgangsschaltung 12 zugeführt, die das Antriebsstellsignal an ein leistungsbestimmendes Stellelement 13 einer Brennkraftmaschine ausgibt. Das leistungsbestimmende Stellelement kann beispielsweise eine elektrisch betätigbare Drosselklappe sein, eine elektrisch gesteuerte Kraftstoffmengenzumesseinrichtung, insbesondere in Form eines Kraftstoffinjektors, oder eine Regelstange einer Einspritzpumpe. Durch Variation des Antriebsstellsignals ist es möglich, die Brennkraftmaschine gemäß einer berechneten Beschleunigung oder einem berechneten Sollmoment zu steuern. Weiterhin wird von der Ausgangsschaltung 12 ein Verzögerungsstellsignal ausgegeben, das an die Verzögerungseinrichtungen 14 des Fahrzeugs ausgegeben wird. Die Verzögerungseinrichtungen 14 sind vorteilhafter Weise elektrisch ansteuerbare Bremssysteme, die gemäß dem Verzögerungsstellsignal eine vorberechnete Bremskraft, einen vorberechneten Bremsdruck oder einen angeforderten Verzögerungswert umsetzen und an die Bremseinrichtungen weitergeben. Ebenfalls ist es vorgesehen, dass die Ausgangsschaltung 12 Fahrerinformationssignale an eine akustische und/oder optische Signalisiereinrichtung 22 ausgeben, die beispielsweise in Form eines Displays, einer oder mehrer Kontrollleuchten oder in Form eines Warnsummers oder einer akustischen Textwiedergabe ausgeführt sein kann. Diese Fahrerinformationseinrichtung 22 zeigt dem Fahrer den Betriebszustand des Abstandsund Geschwindigkeitsreglers 1 an und informiert den Fahrer über eingestellte Parameter und Funktionalitäten der Regeleinrichtung 1.

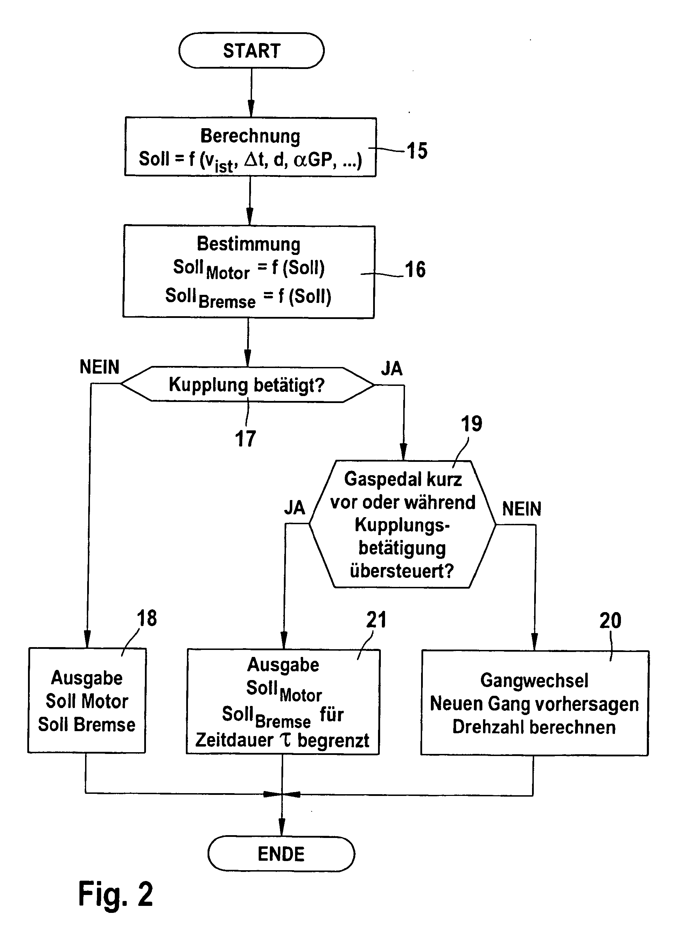

In Figur 2 ist ein Ablaufdiagramm einer Ausführungsform des erfindungsgemäßen Verfahrens dargestellt, das vorteilhaft als elektronisches Programm in der Berechnungseinrichtung 11 vorgesehen ist. Nach dem Start des erfindungsgemäßen Verfahrens wird in Block 15 ein Sollwert berechnet, der beispielsweise eine Sollbeschleunigung oder ein Sollmoment darstellt. Der Sollwert berechnet sich als Funktion aus den Eingangsgrößen, die dem Regler 1 zugeführt wurde. So geschieht die Bestimmung des Sollwertes beispielsweise aus der Relativgeschwindigkeit des erkannten Objektes zum eigenen Fahrzeug, dem Abstand des Objektes zum eigenen Fahrzeug, die mittels dem Objektsensor 3 ermittelt wurden, der Istgeschwindigkeit Vᵢₛₜ, die mittels dem Geschwindigkeitssensor 4 ermittelt wurde, der Winkelstellung des Fahrpedals α GP, in Abhängigkeit der Einstellungen des fahrerbetätigbaren Bedienelementes 5, mittels dem beispielsweise eine Zeitlücke Δt einstellbar ist, die den Sollabstand des eigenen Fahrzeugs zum Objekt vorgibt, sowie dem Ausgangssignal des Kupplungssensors 6. Anschließend werden in Block 16 aus dem in Block 15 ermittelten Sollwert Stellsignale für Motor und Bremse ermittelt. So wird für die Brennkraftmaschine ein Sollbeschleunigungswert Soll_{Motor} in Abhängigkeit des Sollwertes bestimmt, sowie für die Verzögerungseinrichtungen ein Verzögerungsstellsignal Soll_{Bremse} ermittelt, das auf die Bremseinrichtung ausgegeben wird. In Block 17 wird mittels des Eingangssignals des Kupplungssensors 6 festgestellt, ob die Kupplung durch den Fahrer momentan betätigt wird. Ist durch die nicht betätigte Kupplung der Kraftschluss zwischen der Antriebseinheit und den Antriebsrädern gegeben, d.h. die Kupplung ist nicht betätigt, so verzweigt das Ablaufdiagramm nach "NEIN" und es wird in Block 18 das Stellsignal Soll_{Motor} an das leistungsbestimmende Stellelement der Brennkraftmaschine 13 ausgegeben sowie das Verzögerungsstellsignal Soll_{Bremse} an die Verzögerungseinrichtungen 14 ausgegeben. Im Anschluss an Block 18 wird das Verfahren bei "ENDE" beendet und beginnt wiederum von Neuem bei "START". Wird im Block 17 erkannt, dass die Kupplung betätigt ist, also der Kraftschluss zwischen der Antriebseinheit und den Antriebsrädern nicht vorliegt, so verzweigt Block 17 nach "JA" und wird in Block 19 fortgeführt. In Block 19 wird ermittelt, ob das Fahrpedal kurz vor der Kupplungsbetätigung oder während der Kupplungsbetätigung durch den Fahrer gedrückt wurde, also ein Fahrpedalwinkel α FP größer Null vorliegt. Ist dies nicht der Fall, so wünscht der Fahrer des Fahrzeugs keine Beschleunigung, die über die von der Berechnungseinrichtung 11 ermittelte Beschleunigung hinausgeht und es liegt kein Übersteuern des Reglers 1 vor. In diesem Fall verzweigt Block 19 nach "NEIN", woraufhin in Block 20 das Verfahren zum normalen Gangwechsel durchgeführt wird, wie es beispielsweise auch im Stand der Technik erwähnt wurde. Hierzu wird vom Regler 1 vorhergesagt, welche Gangstufe die wahrscheinlichste ist, die der Fahrer einlegen wird, daraufhin wird in Abhängigkeit der neuen Gangstufe und der momentanen Geschwindigkeit Vᵢₛₜ, eine Einkuppeldrehzahl der Antriebseinrichtung berechnet, diese von dem leistungsbestimmenden Stellelement 13 der Brennkraftmaschine umgesetzt und der Fahrer kann ohne das Fahrpedal zu betätigen die Kupplung wieder einkuppeln und die Fahrt ohne Betätigung des Fahrpedals fortführen. Im Anschluss an Block 20 gelangt das Verfahren zum Schritt "ENDE" und beginnt darauf hin wieder von neuem am "START". Wurde in Block 19 erkannt, dass kurz vor der Kupplungsbetätigung oder während der Kupplungsbetätigung durch den Fahrer das Fahrpedal betätigt wurde, also ein Fahrpedalwinkel α FP größer Null vorliegt, so verzweigt Block 19 nach "JA" und es wird erkannt, dass der Fahrer durch die Fahrpedalbetätigung das Fahrzeug höher beschleunigen möchte, als dieses durch die adaptive Abstands- und Geschwindigkeitsregelung 1 vorgesehen ist. Dies ist beispielsweise dann der Fall, wenn der Fahrer zu einem Überholvorgang ansetzen möchte und hierzu die Regeleinrichtung 1 übersteuert, so dass die Regelung unterbrochen wird und eine Beschleunigung gemäß dem Fahrpedalwinkel umgesetzt wird. Bei einem derartigen Beginn eines möglichen Überholvorganges wird oftmals das Getriebe um einen Ganz zurückgeschaltet, um eine höhere Beschleunigungsmöglichkeit des Fahrzeugs zu erreichen, so dass kurz nach der Fahrpedalbetätigung oder gleichzeitig ebenfalls die Kupplung betätigt wird. In diesem Fall wird in Block 21 die Stellgröße Soll_{Motor} an das leistungsbestimmende Stellelement 13 der Brennkraftmaschine ausgegeben, das in Abhängigkeit des Fahrpedalwinkels α GP, der durch den Fahrpedalsensor 7 ermittelt wird, umgesetzt wird. Gleichzeitig wird in diesem Fall das Stellsignal Soll_{Bremse} für eine vorbestimmbare Zeitdauer tau auf einen vorgegebenen Wert begrenzt, um eine unerwünschte Verzögerung des Fahrzeugs zu vermeiden. Diese unerwünschte Verzögerung entsteht, da der Fahrer während dem Schaltvorgang bei geöffneter Kupplung das Fahrpedal loslässt und dieses erst nach beendetem Schaltvorgang wieder erneut betätigt. Durch das Loslassen des Fahrpedals während des Schaltvorgangs wird die Unterbrechung der Regelung aufgehoben und setzt wieder ein, wodurch eine Verzögerung ausgegeben wird, da der Fahrer im Vorfeld des Schaltvorgangs das Fahrzeug auf eine höhere Geschwindigkeit beschleunigt hat, als dieses der Abstands- und Geschwindigkeitsregler vorgesehen hätte. Durch die Begrenzung des Stellsignals Soll_{Bremse} wird eine derartige unerwünschte Verzögerung für die Zeit des Kupplungsvorgangs unterbunden und nach Beendigung des Kupplungsvorgangs wird entweder die Regeleinrichtung erneut durch eine Fahrpedalbetätigung übersteuert oder der Fahrer wünscht nach Beendigung des Kupplungsvorgangs eine Fahrzeugverzögerung, indem das Fahrpedal nicht erneut betätigt wird. Nach Beendigung des Kupplungsvorgangs oder nach Ablauf der Zeitdauer tau wird die Verzögerungsbegrenzung aufgehoben und die Stellsignale Soll_{Motor} und Soll_{Bremse}, wie in Block 16 berechnet, wieder an die Stelleinrichtungen 13 und 14 ausgegeben. Nach Block 21 gelangt das Verfahren wieder an den Punkt "ENDE", woraufhin es wieder bei "START" beginnt. Es kann insbesondere auch vorgesehen sein, dass sowohl die Zeitdauer tau und/oder die Stärke der Begrenzung des Verzögerungsstellsignals durch den Fahrer mittels des fahrerbetätigbaren Bedienelementes 5 einstellbar ist. Ebenfalls kann vorgesehen sein, dass nach Ablauf der Zeitdauer tau oder nach Beendigung des Kupplungsvorgangs die Begrenzung der Verzögerung nicht sprunghaft vollzogen wird, sondern mittels einer Rampenfunktion die Begrenzung aufgehoben wird.

## Patentansprüche

1. Verfahren zur Steuerung der Geschwindigkeit eines Fahrzeugs, wobei die Fahrzeuggeschwindigkeit im Rahmen einer adaptiven Abstandsregelung einen Istwert auf einen vorgegebenen Sollwert steuert (15), wobei bei Unterbrechung des Kraftflusses zwischen der Antriebseinheit des Fahrzeugs (17) und den Antriebsrädern die Regelung (1) zumindest teilweise wirkungslos wird, **dadurch gekennzeichnet, dass** bei einer Gaspedalbetätigung (19) durch den Fahrer unmittelbar vor oder während der Kraftflussunterbrechung (17) für eine vorbestimmte Zeitdauer (tau) eine Verzögerungsbegrenzung (21) aktiviert wird.

2. Verfahren nach Anspruch 1, **dadurch gekennzeichnet, dass** der Istwert und der Sollwert Beschleunigungswerte, Momentenwerte oder Geschwindigkeitswerte sind.

3. Verfahren nach Anspruch 1 oder 2, **dadurch gekennzeichnet, dass** der vorgegebene Sollwert in Abhängigkeit der Relativgeschwindigkeit und/oder des Abstandes mindestens eines vorherfahrenden Fahrzeugs mittels eines Sensors zur adaptiven Abstandsregelung (3) ermittelbar ist.

4. Verfahren nach einem der vorhergehenden Ansprüche, **dadurch gekennzeichnet, dass** der Abstandssensor (3) eines Radarsensor, ein Lasersensor, ein Ultraschallsensor, ein Videosensor oder eine Kombination hieraus ist.

5. Verfahren nach einem der vorhergehenden Ansprüche, **dadurch gekennzeichnet, dass** die Verzögerungsbegrenzung (21) für die Dauer des Gangwechsels aktiv ist.

6. Verfahren nach einem der vorhergehenden Ansprüche, **dadurch gekennzeichnet dass** die Zeitdauer (tau) der Verzögerungsbegrenzung (21) zwischen 1 und 2 Sekunden beträgt.

7. Verfahren nach einem der vorhergehenden Ansprüche, **dadurch gekennzeichnet, dass** die Verzögerungsbegrenzung (21) so dimensioniert ist, dass auf ebener Fahrbahn keine Fahrzeugverzögerung durch die Verzögerungseinrichtungen (14) des Fahrzeugs erfolgt.

8. Vorrichtung zur Steuerung der Geschwindigkeit eines Fahrzeugs, mit einem Regler (1), der die Geschwindigkeit abhängig von einem vorgegebenen Soll- und einem Istwert steuert, mit Erkennungsmitteln (6), die feststellen, ob der Kraftfluss zwischen Antriebseinheit und Antriebsrädern unterbrochen ist, mit Mitteln(11), die den Regler zumindest teilweise wirkungslos schalten, wenn ein unterbrochener Kraftfluss erkannt wurde, **dadurch gekennzeichnet, dass** ferner Erkennungsmittel (7) vorgesehen sind, die eine Fahrpedalbetätigung erkennen und bei Erkennen einer Fahrpedalbetätigung (19) durch den Fahrer unmittelbar vor oder während der Kraftflussunterbrechung (17) für eine vorbestimmte Zeitdauer (tau) eine Verzögerungsbegrenzung (21) aktiviert wird.

9. Vorrichtung nach Anspruch 8, **dadurch gekennzeichnet, dass** fahrerbetätigbare Mittel (5) vorgesehen sind, mittels denen die Zeitdauer (tau) der Verzögerungsbegrenzung (21) durch den Fahrer einstellbar sind.

10. Vorrichtung nach Anspruch 8 oder 9, **dadurch gekennzeichnet, dass** akustische und/oder optische Mittel (22) vorgesehen sind, die dem Fahrer signalisieren, ob die Verzögerungsbegrenzung (21) aktiv ist.

## Claims

1. Method for controlling the speed of a vehicle, with the vehicle speed controlling (15) an actual value on the basis of a preset desired value by means of an adaptive ranging control, with the controller (1) being switched at least partially to an inactive state if the force flow between the propulsion unit of the vehicle (17) and the driven wheels is interrupted, **characterized in that** a deceleration limitation (21) is activated for a predetermined time duration (tau) in the event of an accelerator actuation (19) by the driver immediately before or during the force flow interruption (17).

2. Method according to Claim 1, **characterized in that** the actual value and the desired value are acceleration values, torque values or speed values.

3. Method according to Claim 1 or 2, **characterized in that** the preset desired value can be determined relative to the relative speed and/or distance to at least one preceding vehicle by means of a sensor for adaptive ranging control (3).

4. Method according to one of the preceding claims, **characterized in that** the range sensor (3) is a radar sensor, a laser sensor, an ultrasound sensor, a video sensor or a combination of these.

5. Method according to one of the preceding claims, **characterized in that** the deceleration limitation (21) is active for the duration of the gear change.

6. Method according to one of the preceding claims, **characterized in that** the time duration (tau) of the deceleration limitation (21) is between one and two seconds.

7. Method according to one of the preceding claims, **characterized in that** the deceleration limitation (21) is dimensioned so that on a level carriageway no vehicle deceleration occurs due to the deceleration devices (14) of the vehicle.

8. Device for controlling the speed of a vehicle, with a controller (1) that controls the speed relative to a preset desired value and an actual value, with detection means (6) that detects whether the force flow between the propulsion unit and the driven wheels is interrupted, with means (11) that at least partially switches the controller to an inactive state if an interrupted force flow has been detected, **characterized in that** further detection means (7) are provided which detect an accelerator pedal actuation and in the event of an accelerator pedal actuation (19) being detected by the driver immediately before or during the force flow interruption (17) a deceleration limitation (21) is activated for a predetermined time duration (tau).

9. Device according to Claim 8, **characterized in that** driver-actuatable means (5) are provided by means of which the time duration (tau) of the deceleration limitation (21) can be set by the driver.

10. Device according to Claim 8 or 9, **characterized in that** acoustic and/or optical means (22) are provided that indicate to the driver whether the deceleration limitation (21) is active.

## Revendications

1. Procédé de commande de la vitesse d'un véhicule selon lequel la vitesse du véhicule commande (15) une valeur réelle suivant une valeur de consigne prédéfinie dans le cadre d'une régulation adaptative de distance,
en cas de coupure du flux de force entre l'unité d'entraînement du véhicule (17) et les roues motrices, la régulation (1) est au moins en partie neutralisée,
**caractérisé en ce qu'**
en cas d'actionnement de la pédale d'accélérateur (19) par le conducteur, une limitation de décélération (21) est activée directement avant ou pendant l'interruption du flux de force (17) pendant une durée prédéfinie (tau).

2. Procédé selon la revendication 1,
**caractérisé en ce que**
la valeur réelle et la valeur de consigne sont des valeurs d'accélération, des valeurs de couple ou des valeurs de vitesse.

3. Procédé selon la revendication 1 ou 2,
**caractérisé en ce que**
la valeur de consigne prédéfinie se détermine en fonction de la vitesse relative et/ou de la distance d'au moins un véhicule qui précède à l'aide d'un capteur utilisé pour la régulation adaptative de distance (3).

4. Procédé selon l'une des revendications précédentes,
**caractérisé en ce que**
le détecteur de distance (3) est un détecteur radar, un détecteur laser, un capteur à ultrasons, un capteur vidéo ou une combinaison de ceux-ci.

5. Procédé selon l'une des revendications précédentes,
**caractérisé en ce que**
la limite de décélération (21) est activée pendant la durée du changement de rapport.

6. Procédé selon l'une des revendications précédentes,
**caractérisé en ce que**
la durée (tau) de la limitation de décélération (21) est comprise entre 1 et 2 secondes.

7. Procédé selon l'une des revendications précédentes,
**caractérisé en ce que**
la limitation de temporisation (21) est dimensionnée pour que sur une chaussée plane, l'installation de décélération (14) du véhicule ne produise aucune décélération du véhicule.

8. Dispositif de commande de la vitesse d'un véhicule comprenant un régulateur (1) qui commande la vitesse en fonction d'une valeur de consigne prédéfinie et d'une valeur réelle, des moyens de reconnaissance (6) qui constatent si le flux de force entre l'unité d'entraînement et les roues motrices est interrompu, des moyens (11) qui neutralisent au moins en partie le régulateur si un flux de force interrompu est détecté,
**caractérisé en outre en ce qu'**
il comprend des moyens de reconnaissance (7) qui reconnaissent un actionnement de la pédale d'accélérateur et en cas de détection de l'actionnement de la pédale d'accélérateur (19) par le conducteur, directement avant ou pendant l'interruption du flux de force (17), une limitation de décélération (21) est activée pendant une durée prédéfinie (tau).

9. Dispositif selon la revendication 8,
**caractérisé par**
des moyens (5) actionnés par le conducteur à l'aide desquels le conducteur règle la durée (tau) de la limitation de décélération (21).

10. Dispositif selon les revendications 8 ou 9,
**caractérisé par**
des moyens acoustiques et/ou optiques (22) signalant au conducteur que la limitation de décélération (21) est activée.
